# FASCICULE DE BREVET EUROPEEN

(11) **EP 2 040 975 B1**
(45) Date de publication et mention de la délivrance du brevet: **11.09.2013**
(21) Numéro de dépôt: 07823578.5
(22) Date de dépôt: 12.07.2007
(51) Int. Cl.: B63B 27/24, B67D 9/02, B67D 9/00, F16L 35/00

(54) **DISPOSITIF DE CONNEXION DE L'EXTRÉMITÉ D'UNE CONDUITE DÉFORMABLE D'ACHEMINEMENT D'UN FLUIDE À UNE TUYAUTERIE FIXE TELLE QUE LE MANIFOLD D'UN NAVIRE**
VORRICHTUNG ZUR VERBINDUNG DES ENDES EINES FLEXIBLEN FLÜSSIGKEITSZUFUHRROHRS MIT EINER FESTGELEGTEN ROHRLEITUNG, WIE ZUM BEISPIEL DEM VERTEILER AUF EINEM SCHIFF
DEVICE FOR CONNECTING THE END OF A FLEXIBLE LIQUID SUPPLY PIPE TO A FIXED TUBING SUCH AS THE MANIFOLD ON A SHIP

(30) Priorité: 13.07.2006 FR 0652986
(43) Date de publication de la demande: 01.04.2009
(73) Titulaire: Technip France, 92400 Courbevoie (FR)
(72) Inventeur: DUPONT, Bernard, F-95600 Eaubonne (FR); BOULAT, Luc, 38000 Grenoble (FR); FORGET, Rémi, F-78980 Neauphlete-Breval (FR)
(74) Mandataire: Thinat, Michel
(86) Numéro de dépôt international: PCT/FR2007/051657
(87) Numéro de publication internationale: WO 2008/007034

(56) Documents cités:
- FR-A- 1 569 861
- FR-A1- 2 824 528
- US-A- 4 121 616
- US-A- 4 206 782
- US-A- 4 393 906

## Description

L'invention concerne un dispositif de connexion de l'extrémité d'une conduite déformable d'acheminement d'un fluide, tel qu'un flexible ou une conduite articulée de transfert de gaz naturel liquéfié à une tuyauterie fixe telle que le manifold d'un navire de transport du fluide, du type comprenant un dispositif de guidage de l'extrémité de la conduite à la tuyauterie fixe, lors de l'établissement d'une connexion, qui est pourvu d'une pinoche montée sur la conduite mobile ou la tuyauterie fixe et destiné à s'engager lors de la connexion dans un organe de trompette monté sur la tuyauterie fixe ou le conduit mobile, sous l'effet de la force de traction exercée sur un câble fixé à la pinoche et passant à travers la trompette.

Dans les systèmes de connexion de ce type, qui sont connus, la pinoche et la trompette sont disposées à une certaine distance respectivement de la conduite et de la tuyauterie tout en étant orientées sensiblement parallèlement aux axes de celles-ci. Cette disposition a pour conséquence que la conduite risque d'être sujette à des rotations ou sollicitations en flexion et/ou en torsion lors d'une connexion, au moment de la saisie de l'embout de la conduite.

Un système de connexion selon le préambule de la revendication indépendante est connu du document US-A-4 206 782. Le dispositif de guidage ici divulgue comprend un clapet d'étanchéité mobile, ce qui rend la structure complexe.

L'invention a pour but de proposer un système de connexion qui pallie cet inconvénient.

Pour atteindre ce but, l'invention propose un système de connexion selon la revenducation 1.

Selon une caractéristique avantageuse de l'invention le système est caractérisé en ce que la pinoche est montée coaxialement dans l'orifice de sortie de l'embout ou du corps de connexion de la tuyauterie fixe, en faisant axialement saillie de celui-ci et la trompette est montée coaxialement dans le corps de connexion de la tuyauterie fixe ou dans l'extrémité de l'embout.

Selon une autre caractéristique avantageuse de l'invention le système est caractérisé en ce que le corps de connexion de la tuyauterie fixe ou la partie d'extrémité de l'embout, qui contient la trompette est configurée de façon que la trompette puisse déboucher vers l'extérieur dans la paroi extérieure du corps de connexion ou de l'embout.

Selon une autre caractéristique avantageuse de l'invention le système est caractérisé en ce que le corps de connexion ou l'embout, qui est pourvue de la trompette porte un treuil d'enroulement du câble de transport de l'embout vers la tuyauterie fixe.

Selon une autre caractéristique avantageuse de l'invention le système est caractérisé en ce que la tuyauterie fixe est le tube d'un dispositif de connexion déplaçable entre une position de repos et une position de transfert de fluide dans laquelle ce tube est interposé entre le manifold du navire et l'embout de la conduite souple.

Selon une autre caractéristique avantageuse de l'invention le système est caractérisé en ce que la conduite déformable est formée par un flexible.

Selon une autre caractéristique avantageuse de l'invention le système est caractérisé en ce que la conduite déformable est formée par une succession de segments articulés.

Selon une autre caractéristique avantageuse de l'invention le système est caractérisé en ce que la partie d'extrémités de la conduite déformable comporte une succession de trois segments qui sont reliés les uns aux autres par trois joints tournants dont les axes sont orthogonaux les uns aux autres.

Selon une autre caractéristique avantageuse de l'invention le système est caractérisé en ce que les segments sont courbés de façon que l'extrémité reliée à l'embout est coaxiale à ce dernier et l'extrémité libre du segment qui est fixé au restant de la conduite est également coaxiale à l'embout.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :
- la figure 1 est une vue perpendiculaire à l'axe d'un navire de transport équipé d'un système de connexion selon l'invention, illustré à l'état de connexion de la conduite déformable de transfert au manifold du navire ;
- la figure 2 est une vue similaire à la figure 1 mais sans connexion de la conduite au manifold ;
- la figure 3 est une vue à plus grande échelle de la partie III de la figure 1 ;
- la figure 4 est une vue en perspective et partiellement en coupe et à plus grande échelle d'un système de connexion semblable à celui de la figure 3, à un moment plus tard du processus de connexion ;
- la figure 5 est une vue en perspective illustrant un autre mode de réalisation d'un système de connexion selon l'invention, et
- les figures 6 et 7 sont des vues latérales de deux variantes d'un autre mode de réalisation de l'invention.

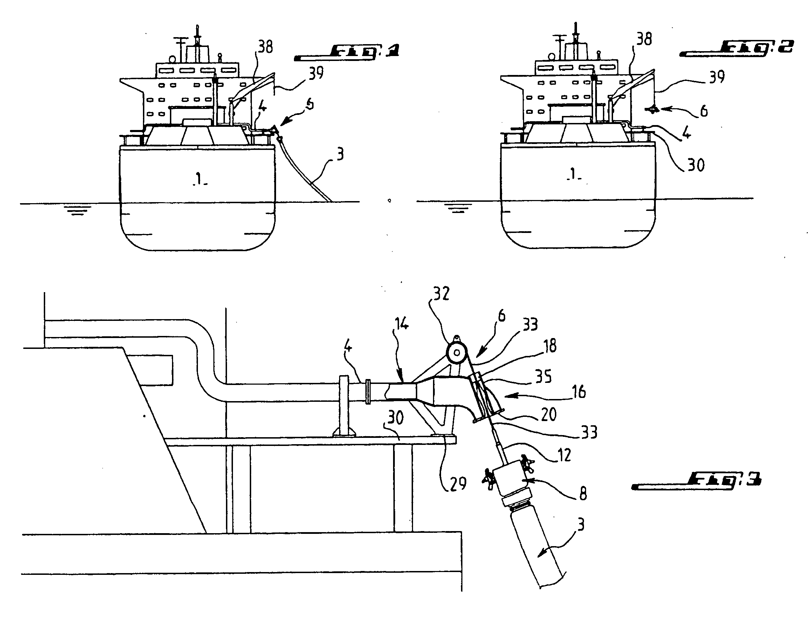

La figure 1 montre en 1 un navire de transport d'un fluide par exemple d'un gaz naturel liquéfié et en 2 un système de connexion d'une conduite déformable 3 au manifold 4 de ce navire, qui dans l'exemple représenté est un flexible. De façon générale, le navire constitue un référentiel indépendant de la conduite et animé de mouvements différents de celui de la conduite.

Dans ce mode de réalisation de l'invention, le système de connexion comporte un dispositif de connexion 6 déplaçable entre une position de stockage montrée sur la figure 2 et une position de connexion dans laquelle il est interposé entre le manifold 4 et l'embout de connexion 8 de la conduite 3. Les figures 1, 3 et 4 montrent le dispositif dans cette position de connexion.

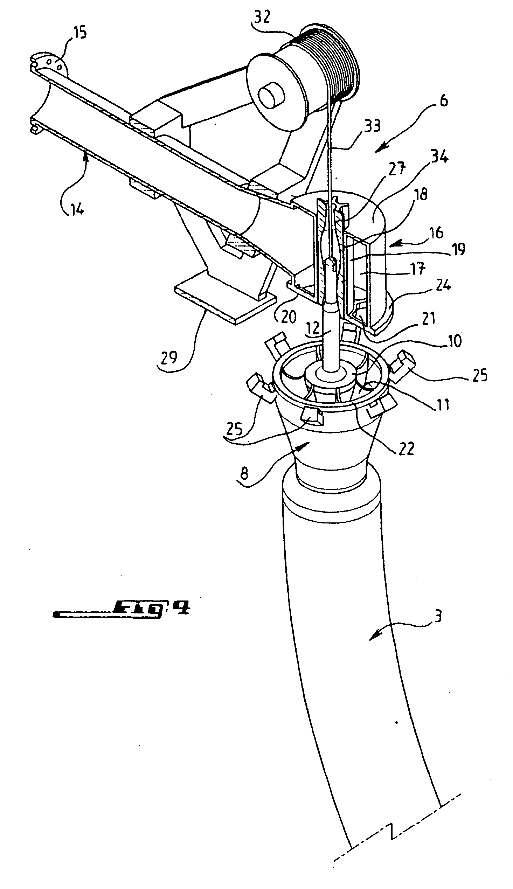

Comme on le voit très clairement à la figure 4, l'embout de connexion 8 du flexible 3 comporte un organe tel qu'un noyau coaxial 10 retenu par des parois radiales de fixation 11 dans l'orifice de sortie. Le moyen porte une pinoche de guidage 12 qui s'étend dans et parallèle à l'axe de l'embout 8 et du flexible 3. La pinoche s'étend ainsi coaxialement au flexible, hors de l'embout en faisant axialement saillie de celui-ci en direction du dispositif de connexion 6.

Ce dispositif 6 comporte un tube 14 dont une extrémité est pourvue d'une bride 15 de fixation au manifold 4 tandis que l'autre extrémité destinée à être connectée à l'embout 8 est réalisée sous forme d'un corps tubulaire cylindrique 16. Ce corps 16 délimite un espace annulaire 17 entre sa paroi cylindrique externe 18 et une partie centrale creuse 19. L'espace annulaire 17 communique avec le tube 14 et est ouvert en direction de l'embout 8.

Le corps creux d'extrémité 16 comporte en face de l'embout 8 une paroi 20 qui s'étend perpendiculairement à l'axe du corps cylindrique et aussi à l'axe de la pinoche 12. Cette paroi 20 comporte des perçages 21 à travers lesquels l'embout 8 et le tube 14 communiquent à l'état de connexion, la paroi 20 étant alors appliquée à la face frontale annulaire 22 de l'embout. La paroi 20 s'étend radialement au-delà de la paroi extérieure du corps creux 16 et forme un rebord annulaire 24. L'embout comporte, régulièrement répartie autour de son extrémité ouverte, une pluralité d'éléments de serrage 25, en forme de clamps ou chiens ou analogue qui sont configurés pour pouvoir pivoter entre une position de retenue du corps creux 16 du tube 14 contre la face frontale annulaire 22 de l'embout 8, c'est-à-dire dans la position de connexion de la conduite 3 sur le tube 14, et une position dégagée montrée sur la figure 4.

La paroi cylindrique interne 18 du corps creux d'extrémité 16 du dispositif connecteur 6 délimite un espace annulaire dans lequel peut être monté coaxialement un insert tubulaire 27. La paroi tubulaire 17 avec son insert 27 constitue la trompette de réception de la pinoche 12 comme on le voit clairement sur la figure 4. La paroi interne peut aussi directement constituer la trompette de réception.

Le dispositif de connexion 6 est configuré pour supporter le tube 14 et comprend un pied 29 par lequel il peut prendre appui sur le pont 30 du navire 1. Le dispositif supporte en outre un treuil 32 situé au dessus du tube 14 et du corps 16 de façon qu'un câble 33 qui peut s'enrouler autour de lui puisse passer sensiblement coaxialement à travers la trompette de réception de la pinoche 12 de l'embout 8 et, après être fixé à la pointe de la pinoche tirer celle-ci dans la trompette lorsqu'il est enroulé autour du treuil, de la manière illustrée sur la figure 4.

Conformément à la figure 4, l'élément de trompette 18 s'ouvre, du côté du treuil 32 dans une paroi 34 qui est parallèle à la paroi 20 du corps d'extrémité 16. Dans le cas de la figure 3, le corps d'extrémité est courbé de façon que sa paroi d'orifice de sortie 20 soit inclinée par rapport à l'horizontale et que l'élément de trompette 18 puisse s'ouvrir dans la paroi périphérique du corps d'extrémité, en 35, dans la portion recourbée du corps. Il est à noter que l'élément de trompette s'étend coaxialement dans l'axe de l'orifice de sortie et est rectiligne.

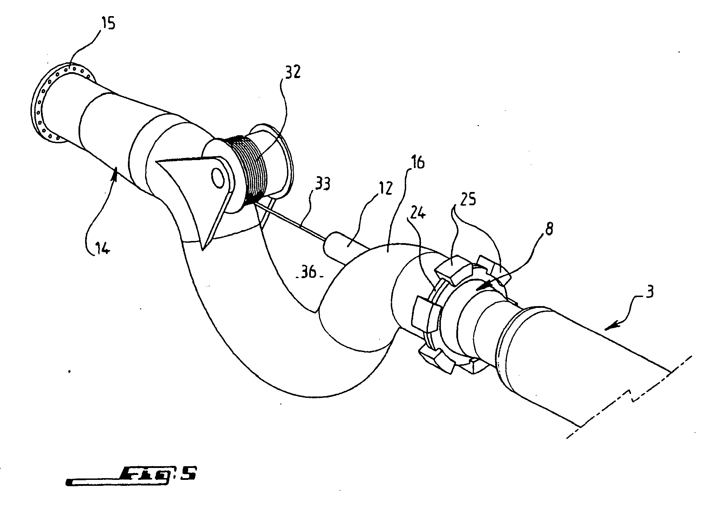

La figure 5 montre un autre mode de réalisation du système de connexion. Dans ce cas, la tuyauterie fixe formée par le tube 14 est configurée en Ω de façon à créer un espace 36 dans laquelle peut s'engager l'extrémité libre de la pinoche et le câble de traction 33, le treuil 32 étant monté directement sur le tube 14 au niveau de la naissance de la courbure, en face de l'extrémité de la pinoche. Comme dans le cas de la figure 3, une extrémité de la tubulure 10 présente une bride 15 de fixation au manifold du navire tandis que l'autre extrémité est pourvue de l'élément de trompette interne monté coaxialement. Cette extrémité est susceptible d'être connectée et retenue sur l'embout 8 de la conduite 3 par des clamps ou chiens 25, comme on le voit déjà sur les figures 3 et 4, qui peuvent être de n'importe quel type mécanique, hydraulique ou analogue.

Concernant le fonctionnement du système de connexion, à l'état de repos l'embout 8 de la conduite 3 peut flotter à la surface de la mer ou être sur un autre référentiel mobile. Lorsqu'il doit être connecté au manifold d'un navire placé à proximité de l'embout, la partie du système de connexion, à savoir le dispositif de connexion 6, qui à l'état de repos est suspendu en hauteur, au-dessus du pont 30 du navire à l'extrémité d'un bras de support 38, par l'intermédiaire d'un câble 39 est tout d'abord abaissé sur le pont 30 de façon que son pied 29 puisse prendre appui sur ce pont. Le dispositif de connexion pourrait aussi être stocké sur le navire et mis en place à l'aide d'un bras. Puis le câble 33 est déroulé du treuil 31 en passant par la trompette pour être fixé par son extrémité libre au bout de la pinoche 12. Ensuite, en enroulant le câble sur le treuil, l'embout 8 est tiré vers l'extrémité de connexion du tube 14 et dans la dernière phase, positionné correctement par le câble, la pinoche et la trompette, guidée jusque dans sa position de connexion sur cette extrémité du tube. En raison de la disposition coaxiale de la pinoche dans l'embout 8 de la conduite déformable 3, le transport de l'embout vers sa position de connexion n'occasionne aucune rotation et ainsi aucune torsion ou flexion parasite dans la conduite.

Il est à noter que la conduite pourrait être un flexible ou formée par une succession de segments articulés rigides. D'autre part, le dispositif de connecteur pourrait être fixé à demeure sur la tubulure.

Bien entendu dans le cadre de l'invention, la pinoche pourrait être montée dans l'extrémité du tube fixe et la trompette dans l'embout 8 de la conduite déformable 3. Le treuil serait alors également monté sur l'embout qui pourrait alors former une forme courbe, de façon similaire à l'extrémité de connexion du tube 14 à la figure 3 pour assurer l'ouverture vers l'extérieur de la trompette.

Concernant le dispositif de connexion, au lieu d'être déplaçable comme dans l'exemple représenté, il pourrait être monté à demeure sur le pont du navire. Ce dispositif a pour fonction essentielle de déporter la face de connexion à laquelle l'embout de la conduite sera connecté au bord du navire ou au-delà de celui-ci pour assurer la collection par en bas de la conduite, avantageusement selon un angle approprié à la direction verticale ou même dans cette direction.

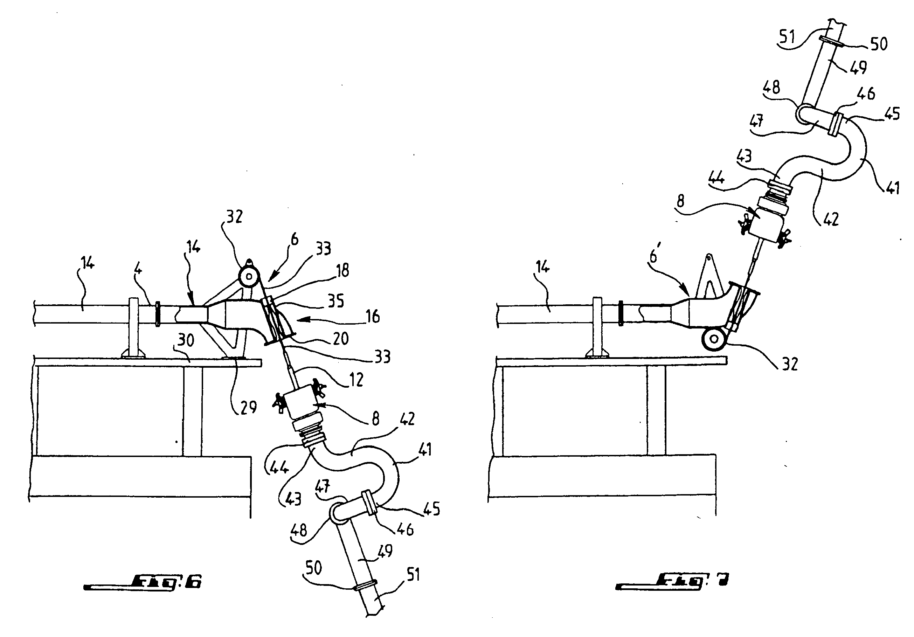

Il ressort de ce qui précède, que l'invention concerne, de façon générale, la connexion de deux tuyauteries chacune fixe ou mobile et animées de mouvements incoercibles différents et déformables ou rigides. L'opération de connexion est assurée simplement par la traction coaxiale du câble puis de la pinoche à travers la trompette traversant ou débouchant elle-même du confinement fluide, afin d'éviter lors de la connexion des contraintes parasites de torsion ou flexion dans le cas de flexibles ou des rotations parasites dans le cas des bras articulés dotés d'un équivalent rotule à leurs extrémités. Les figures 6 et 7 illustrent l'extrémité de connexion d'une conduite, qui comprend trois segments successifs, reliés les uns aux autres par trois joints tournants chacun ayant un axe orienté dans une de trois dimensions orthogonales. Plus précisément, la partie d'extrémité comprend un segment 41 en forme d'un U dont une branche 42 est prolongée et courbée selon un angle de 90°, tout en demeurant dans le plan du U. L'extrémité libre 43 est reliée à l'embout 8 par un joint tournant 44. L'extrémité libre de l'autre branche 45 du segment 41 est reliée par un joint tournant 46 à un deuxième segment 47 courbé en forme d'un L dont l'autre extrémité est reliée par un joint tournant 48 à un troisième segment de conduite 49 également courbé en forme d'un L dont l'extrémité libre 50 est coaxiale à l'embout 8 et fixée par une bride 51 au bras 52 de la conduite, qui est alignée avec la branche 50 du segment 49. Il est à noter que les branches adjacentes et connectées des deux segments 47 et 49 sont alignées l'une avec l'autre et que leurs autres branches et délimitent un angle de 90°. C'est grâce à cette configuration de l'extrémité de connexion de la conduite que les axes des trois joints tournants 44, 46 et 48 s'étendent chacun dans une des trois directions orthogonales de l'espace.

Les figures 6 et 7 illlustrent en outre que l'embout de la connexion 8 de la conduite mobile peut être connectée à la tuyauterie fixe, en étant orienté de façon oblique, d'en bas, conformément à la figure 3 ou d'en haut. Dans ce dernier cas, le dispositif de connexion 6, portant maintenant la référence 6' présente essentiellement la configuration de la figure 3, mais s'ouvre obliquement vers le haut, le treuil 32 étant alors disposé en-dessous.

## Revendications

1. Système de connexion d'une conduite (3) mobile, déformable d'acheminement d'un fluide, tel qu'un flexible de transfert de gaz naturel liquéfié ou une succession de segments articulés, à une tuyauterie fixe (14) prévue sur un support et constituant un référentiel différent, tel que le manifold d'un navire de transport du fluide, du type comprenant un embout (8) à l'extrémité de la conduite déformable, un corps de connexion (16) à l'extrémité de la tuyauterie (14) auquel l'embout (8) qui, à l'état de repos, est séparé du corps de connexion, est destiné à être connecté pour effectuer un transfert de fluide, un dispositif de guidage de l'embout au corps de connexion, qui comporte des moyens de guidage (12) montés sur l'embout (8) et des moyens de guidage (18) monté sur le corps de connexion (16) et qui sont configurés de façon que l'un puisse s'engager dans l'autre lors de l'établissement de la connexion de l'embout audit corps pour effectuer un transfert de fluide, et un câble de traction (33) pour assurer ledit engagement étant fixé à la pinoche,
**caractérisé en ce que** les moyens de guidage sont formés respectivement par une pinoche (12) et un organe tubulaire de réception de la pinoche, en forme d'une trompette (18) et montés fixes sur l'embout (8) ou le corps (16), que l'organe monté sur l'embout (8) est coaxial à l'embout et **en ce que** la pinoche et la trompette sont déposées à l'extérieur de la voie d'acheminement du fluide à travers le système à l'état de connexion de l'embout (8) au corps (16) de la tuyauterie (14), le câble de traction (33)
s'étendant à travers la trompette lors de l'établissement de la connexion de l'embout (8) audit corps de connexion (16).

2. Système selon la revendication 1, **caractérisé en ce que** la pinoche (12) est montée coaxialement dans l'orifice de sortie de l'embout (8) ou du corps de connexion (16) de la tuyauterie fixe (14), en faisant axialement saillie de celui-ci et la trompette (18) est montée coaxialement dans le corps de connexion (16) de la tuyauterie fixe (14) ou dans l'extrémité de l'embout (8).

3. Système selon la revendication 2, **caractérisé en ce que** le corps de connexion (16) de la tuyauterie fixe ou la partie d'extrémité de l'embout (8), qui contient la trompette est configurée de façon que la trompette puisse
du corps déboucher vers l'extérieur dans la paroi extérieure du corps de connexion ou de l'embout.

4. Système selon l'une des revendications 1 à 3, **caractérisé en ce que** le corps de connexion ou l'embout, qui est pourvue de la trompette porte un treuil (32) d'enroulement du câble (33) de transport de l'embout (8) vers la tuyauterie fixe.

5. Système selon l'une des revendications 1 à 4, **caractérisé en ce que** la tuyauterie fixe est le tube (14) d'un dispositif de connexion (6) déplaçable entre une position de repos et une position de transfert de fluide dans laquelle ce tube est interposé entre le manifold (4) du navire et l'embout (8) de la conduite souple.

6. Système selon l'une des revendications 1 à 4, **caractérisé en ce que** la conduite déformable (3) est formée par un flexible.

7. Système selon l'une des revendications 1 à 5, **caractérisé en ce que** la conduite déformable (3) est formée par une succession de segments articulés.

8. Système selon l'une des revendications 1 à 5 et 7, **caractérisé en ce que** la partie d'extrémités de la conduite déformable comporte une succession de trois segments (42, 47, 49) qui sont reliés les uns aux autres par trois joints tournants (44, 46, 48) dont les axes sont orthogonaux les uns aux autres.

9. Système selon la revendication 8, **caractérisé en ce que** les segments (42, 47, 49) sont courbés de façon que l'extrémité (43) reliée à l'embout (8) est coaxiale à ce dernier et l'extrémité libre (50) du segment (49) qui est fixé au restant de la conduite est également coaxiale à l'embout (8).

10. Système selon l'une des revendications 1 à 9, **caractérisé en ce que** l'organe de guidage (18) monté sur la tuyauterie fixe est disposé coaxialement dans celle-ci.

11. Système selon l'une des revendications 1 à 10, **caractérisé en ce que** le corps de connexion (16) comprend une paroi (20) qui s'étend perpendiculairement à l'axe du corps cylindrique de connexion (16), la paroi (20) étant pourvue de passages (21) d'écoulement de fluide et l'orifice de sortie de l'embout (8) est configuré pour être appliqué contre la paroi (20) du corps de connexion lorsque l'embout est connecté à ce corps.

12. Système selon la revendication 11, **caractérisé en ce que** les passages (21) d'écoulement de fluide sont disposés autour de la trompette et l'orifice de sortie de l'embout (8) comporte un noyau central qui porte la pinoche (12), de façon que l'espace annulaire autour du noyau constitue le passage d'écoulement d'un fluide à transférer.

13. Système selon la revendication 12, **caractérisé en ce que** l'embout comporte régulièrement répartie autour de son extrémité ouverte une pluralité d'éléments de serrage (25) en forme de clamps ou chiens ou analogue qui sont configurés pour pouvoir pivoter pour venir en prise avec la paroi (20) pour fixer l'embout (8) sur le corps d'extrémité (16).

## Patentansprüche

1. System zur Verbindung einer beweglichen, verformbaren Leitung (3) zur Beförderung eines Fluids, wie z.B. eines Schlauchs zur Übertragung von verflüssigtem Erdgas oder einer Aufeinanderfolge von Gelenksegmenten an eine feste Rohrleitung (14), die auf einem Träger vorgesehen ist und eine verschiedenes Bezugssystem darstellt, wie z.B. das Verteilungsrohr eines Schiffs zum Transport des Fluids, vom Typ umfassend ein Ansatzstuck (8) am Ende der verformbaren Leitung, einen Verbindungskörper (16) am Ende der Rohrleitung (14), an das das Ansatzstück (8), das im Ruhezustand vom Verbindungskörper getrennt ist, verbunden werden soll, um eine Übertragung von Fluid durchzuführen, eine Vorrichtung zur Führung des Ansatzstücks an den Verbindungskörper, der Führungsmittel (12) umfasst, die auf dem Ansatzstück (8) montiert sind, und Führungsmittel (18), die auf dem Verbindungskörper (16) montiert sind, und die so konfiguriert sind, dass das eine in das andere eingreifen kann, wenn die Verbindung des Ansatzstücks mit dem Körper hergestellt wird, um eine Übertragung von Fluid durchzuführen, und ein Zugseil (33), um sicherzustellen, dass der Eingriff an die Spindel befestigt ist,
**dadurch gekennzeichnet, dass** die Führungsmittel aus einer Spindel (12) bzw. einem rohförmigen Organ zur Aufnahme der Spindel gebildet sind, in Form einer Trompete (18), und fest auf dem Ansatzstück (8) oder dem Köper (16) montiert sind, dass das Organ, das auf dem Ansatzstück (8) montiert ist, koaxial zum Ansatzstück ist, und dadurch, dass die Spindel und die Trompete an der Außenseite des Beförderungswegs des Fluids über das System im Zustand der Verbindung des Ansatzstücks (8) an den Körper (16) der Rohrleitung (14) abgelegt sind, wobei sich das Zugseil (33) über die Trompete erstreckt, wenn die Verbindung des Ansatzstücks (8) an den Verbindungskörper (16) hergestellt wird.

2. System nach Anspruch 1, **dadurch gekennzeichnet, dass** die Spindel (12) koaxial in der Ausgangsöffnung des Ansatzstücks (8) oder des Verbindungskörpers (16) der festen Rohrleitung (14) montiert ist, indem sie axial hervorspringt, und die Trompete (18) koaxial im Verbindungskörper (16) der festen Rohrleitung (14) oder dem Endteil des Ansatzstücks (8) montiert ist.

3. System nach Anspruch 2, **dadurch gekennzeichnet, dass** der Verbindungskörper (16) der festen Rohrleitung oder der Endteil des Ansatzstücks (8), der die Trompete umfasst, so konfiguriert ist, dass die Trompete nach außen in die Außenwand des Verbindungskörpers oder des Ansatzstücks münden kann.

4. System nach einem der Ansprüche 1 bis 3, **dadurch gekennzeichnet, dass** der Verbindungskörper oder das Ansatzstück, das die Trompete umfasst, eine Winde (32) zum Aufwickeln des Transportkabels (33) vom Ansatzstück (8) zur festen Rohrleitung trägt.

5. System nach einem der Ansprüche 1 bis 4, **dadurch gekennzeichnet, dass** die feste Rohrleitung das Rohr (14) einer Verbindungsvorrichtung (6) ist, die zwischen einer Ruheposition und einer Position des Transports des Fluids verschoben werden kann, in der dieses Rohr zwischen dem Rohrverteiler (4) des Schiffs und dem Ansatzstück (8) der flexiblen Leitung gestellt wird.

6. System nach einem der Ansprüche 1 bis 4, **dadurch gekennzeichnet, dass** die verformbare Leitung (3) durch einen Schlauch gebildet ist.

7. System nach einem der Ansprüche 1 bis 5, **dadurch gekennzeichnet, dass** die verformbare Leitung (3) aus einer Aufeinanderfolge von Gelenksegmenten gebildet ist.

8. System nach einem der Ansprüche 1 bis 5 und 7, **dadurch gekennzeichnet, dass** der Teil der Enden der verformbaren Leitung eine Aufeinanderfolge von drei Segmenten (42, 47, 49) umfasst, die miteinander durch drei Drehgelenke (44, 46, 48) verbunden sind, deren Achsen zueinander orthogonal sind.

9. System nach Anspruch 9, **dadurch gekennzeichnet, dass** die Segmente (42, 47, 49) gekrümmt sind, so dass das Ende (43), das mit dem Ansatzstück (8) verbunden ist, koaxial mit diesem Letzteren ist; und das freie Ende (50) des Segments (49), das an die restliche Leitung befestigt ist, ebenfalls koaxial mit dem Ansatzstück (8) ist.

10. System nach einem der Ansprüche 1 bis 9, **dadurch gekennzeichnet, dass** das Führungsorgan (18), das auf der festen Rohrleitung montiert ist, koaxial in dieser angebracht ist.

11. System nach einem der Ansprüche 1 bis 10, **dadurch gekennzeichnet, dass** der Verbindungskörper (16) eine Wand (20) umfasst, die sich senkrecht zur Achse des zylindrischen Verbindungskörpers (16) erstreckt, wobei die Wand (20) mit Durchgängen (21) zum Abfluss des Fluids ausgestattet ist, und die Ausgangsöffnung des Ansatzstücks (8) konfiguriert ist, um gegen die Wand (20) des Verbindungskörpers angebracht zu werden, wenn das Ansatzstück mit diesem Körper verbunden wird.

12. System nach Anspruch 11, **dadurch gekennzeichnet, dass** die Durchgänge (21) zum Abfluss von Fluid um die Trompete angeordnet sind und die Ausgangsöffnung des Ansatzstücks (8) einen zentralen Kern umfasst, der die Spindel (12) trägt, so dass der ringförmige Raum um den Kern den Durchgang zum Abfluss eines Fluids, das übertragen werden soll, bildet.

13. System nach Anspruch 12, **dadurch gekennzeichnet, dass** das Ansatzstück regelmäßig verteilt um sein offenes Ende eine Vielzahl von Spannelementen (25) in der Form von Klemmen oder Hähnen oder dergleichen umfasst, die konfiguriert sind, um sich drehen zu können, um mit der Wand (20) einzugreifen, um das Ansatzstück (8) auf dem Endkörper (16) zu befestigen.

## Claims

1. A system for connecting a movable pipe (3), deformable for conveying a fluid, such as a liquefied natural gas transfer hose or a series of articulated segments, to a stationary tubing (14) provided on a support and making up a different referential, such as the manifold of a ship carrying fluid, of the type comprising a connector (8) at the end of the deformable pipe, a connection body (16) at the end of the tubing (14) to which the connector (8) which, when idle, is separated from the connection body, is designed to be connected to perform a fluid transfer, a device for guiding the connector to the connection body, which includes guide means (12) mounted on the connector (8) and guide means (18) mounted on the connection body (16) and which are configured so that one can be engaged in the other upon establishment of the connection of the connector to said body to perform a fluid transfer, and a traction cable (33) to ensure said engagement being fixed to the cone,
**characterized in that** the guide means are respectively formed by a cone (12) and a tubular member for receiving the cone, in the form of a trumpet (18), and mounted fixed on the connector (8) or the body (16), the member mounted on the connector (8) is coaxial to the connector, and **in that** the cone and the trumpet are positioned outside the conveyance path of the fluid toward the system in the state of the connector (8) connected to the body (16) of the tubing (14), the traction cable (33) extending through the trumpet upon establishment of the connection of the connector (8) to said connection body (16).

2. The system according to claim 1, **characterized in that** the cone (12) is mounted coaxially in the outlet orifice of the connector (8) or the connection body (16) of the stationary tubing (14), protruding axially therefrom, and the trumpet (18) is mounted coaxially in the connection body (16) of the stationary tubing (14) or in the end of the connector (8).

3. The system according to claim 2, **characterized in that** the connection body (16) of the stationary tubing or the end portion of the connector (8), which contains the trumpet, is configured such that the trumpet can emerge toward the outside in the outer connection wall of the connection body or the connector.

4. The system according to one of claims 1 to 3, **characterized in that** the connection body or the connector, which is provided with the trumpet, bears a winch (32) for winding the transport cable (33) of the connector (8) toward the stationary tubing.

5. The system according to one of claims 1 to 4, **characterized in that** the stationary tubing is the tube (14) of a connection device (6) movable between an idle position and a fluid transfer position in which that tube is inserted between the manifold (4) of the vessel and the connector (8) of the flexible pipe.

6. The system according to one of claims 1 to 4, **characterized in that** the deformable pipe (3) is formed by a hose.

7. The system according to one of claims 1 to 5, **characterized in that** the deformable pipe (3) is formed by a series of articulated segments.

8. The system according to one of claims 1 to 5 and 7, **characterized in that** the end portion of the deformable pipe includes a series of three segments (42, 47, 49) that are connected to each other by three rotary joints (44, 46, 48) whereof the axes are orthogonal to each other.

9. The system according to claim 8, **characterized in that** the segments (42, 47, 49) are curved such that the end (43) connected to the connector (8) is coaxial thereto and the free end (50) of the segment (49) that is fixed to the remainder of the pipe is also coaxial to the connector (8).

10. The system according to one of claims 1 to 9, **characterized in that** the guide member (18) mounted on the stationary tubing is positioned coaxially therein.

11. The system according to one of claims 1 to 10, **characterized in that** the connection body (16) comprises a wall (20) that extends perpendicular to the axis of the cylindrical connection body (16), the wall (20) being provided with fluid flow passages (21) and the outlet orifice of the connector (8) is configured to be pressed against the wall (20) of the connection body when the connector is connected to that body.

12. The system according to claim 11, **characterized in that** the fluid flow passages (21) are positioned around the trumpet and the outlet orifice of the connector (8) includes a central core that bears the cone (12), such that the annular space around the core constitutes the flow passage for a fluid to be transferred.

13. The system according to claim 12, **characterized in that** the connector includes, regularly distributed around its open end, a plurality of gripping elements (25) in the form of clamps or crocodile clips or similar devices that are configured to be able to pivot so as to be engaged with the wall (20) to fix the connector (8) on the end body (16).
